# EUROPÄISCHE PATENTANMELDUNG

(11) **EP 4 420 850 A1**
(43) Veröffentlichungstag der Anmeldung: **28.08.2024**
(21) Anmeldenummer: 24159773.1
(22) Anmeldetag: 26.02.2024
(51) Int. Cl.: B26D 7/32, B65G 47/00, F16C 3/02, F16F 1/14

(54) **ACHSE BZW. WELLE**

(30) Priorität: 27.02.2023 DE 102023104700
(71) Anmelder: Schindler Holding GmbH & Co KG, 73655 Plüderhausen (DE)
(72) Erfinder: Schindler, Jens, 73655 Plüderhausen (DE)
(74) Vertreter: Patentanwaltzkanzlei Hutzelmann

(57) **Zusammenfassung**

Achse (1) bzw. Welle, wobei die Achse (1) mehrteilig ausgebildet ist.

## Beschreibung

Die Erfindung bezieht sich auf eine Achse bzw. Welle.

Diese Wellen werden oftmals für Transportbänder auch in Lebensmittel verarbeitenden Maschinen eingesetzt.

Hierzu sind auf den Achsen bzw. Wellen oftmals Buchsen aufgebracht, auf denen das Transportmedium geführt ist.

In allen Anwendungen ist es jedenfalls unabdingbar, daß die Wellen regelmäßig gereinigt und/oder gewartet werden können.

Bei bekannten Achsen bzw. Wellen ist es jedoch nicht möglich, ohne aufwendige Demontagearbeiten, auch den Zwischenraum zwischen der Achse und den Buchsen zu reinigen.

Aufgabe der Erfindung ist es daher, eine Möglichkeit zu schaffen, auch im eingebauten Zustand und ohne Demontagearbeiten auch diesen Zwischenraum reinigbar zu machen.

Diese Aufgabe wird erfindungsgemäß dadurch gelöst, daß die Achse mehrteilig ausgebildet ist.

Zwischen den Teilen der Achse kann beispielsweise Reinigungsmittel eingebracht und so der Zwischenraum gereinigt werden.

Dabei hat es sich als besonders vorteilhaft erwiesen, wenn mehrere Teilwellen nebeneinander angeordnet sind.

Hierdurch wird ein Freiraum geschaffen, der für die Reinigung genutzt werden kann.

Eine äußerst vorteilhafte Ausgestaltung der Erfindung liegt vor, wenn die Teilwellen stabförmig, teilkreisförmig, segmentförmig, drei- oder mehreckig ausgebildet sind.

Je nach Anwendungsfall lassen sich unterschiedliche Wellen gestalten. Kombinationen sind denkbar. Gerade bei teilkreisförmigen oder segmentförmigen Teilwellen lassen sich Zugkräfte sehr gut übertragen.

Besonders vorteilhaft ist es erfindungsgemäß, wenn die Teilwellen zusammen die Achse bzw. Welle bilden.

Hierdurch wird eine aus Teilwellen bestehende, stabile Welle bzw. Achse gebildet.

Als besonders vorteilhaft hat es sich erwiesen, wenn die Teilwellen voneinander beabstandet angeordnet sind.

Durch eine beabstandete Anordnung wird die Konstruktion stabil.

Erfindungsgemäß hat es sich auch als sehr vorteilhaft erwiesen, wenn die Teilachsen bzw. Teilwellen in sich gedreht bzw. gedrillt, insbesondere schraubenförmig ausgebildet sind.

Hiermit wird eine nochmals größere Stabilität der Gesamtwelle erzielt. Eine gleichlaufende Verdrillung ist denkbar.

Weiterhin hat es sich als äußerst vorteilhaft erwiesen, wenn die Teilwellen zumindest punktuell miteinander verbunden sind.

Damit wird die Stabilität der Anordnug nochmals erheblich erhöht.

Weiterhin hat es sich als besonders vorteilhaft erwiesen, wenn mindestens eine Hülse vorgesehen ist, die auf die Achse aufgeschoben ist.

Die Hülse lässt sich auf der Achse drehen und kann beispielsweise als Umlenkung für Transportbänder genutzt werden.

Dabei hat es sich als sehr vorteilhaft erwiesen, wenn die Hülse innen einen kreisförmigen Querschnitt aufweist.

Hierdurch wird eine gute Drehbarkeit gewährleistet.

Eine sehr vorteilhafte Weiterbildung der Erfindung liegt auch darin, daß die Hülse innen einen an die Achse angepassten Querschnitt aufweist.

Durch einen angepassten Querschnitt werden nochmals erweiterte Möglichkeiten geschaffen.

Ebenfalls sehr vorteilhaft ist es erfindungsgemäß, wenn die Hülse innen einen in die Achse eingreifenden Querschnitt aufweist.

Durch einen in die Achse eingreifenden Querschnitt können auch Kräfte zwischen Achse und Hülse übertragen werden, die zum Beispiel einen Antrieb von Transportbändern ermöglichen.

Weiterhin sehr vorteilhaft ist es erfindungsgemäß, wenn die Hülse auf der Achse drehbar gelagert ist.

Durch die Drehbarkeit wird ein sauberer Lauf der Hülse auf der Achse und damit eines beispielhaften Transportbandes ermöglicht.

Ebenfalls sehr vorteilhaft ist es erfindungsgemäß, wenn die Hülse auf der Achse hinsichtlich ihrer Drehbarkeit kraftschlüssig gelagert ist.

Hierdurch kann ein Antrieb realisiert werden.

Eine äußerst vorteilhafte Weiterbildung der Erfindung liegt auch vor, wenn die Hülse auf der Achse verschiebbar gelagert ist.

Durch ein Verschieben der Hülse auf der Achse kann sowohl Achse als auch Hülse nochmals besser gereinigt werden. Zudem kann die Hülse je nach Anwendung auf der Achse verschoben werden. Es lassen sich unterschiedliche Zusammenstellungen von Hülsen auf einer Achse realisieren.

Eine weitere sehr vorteilhafte Fortbildung der Erfindung liegt vor, wenn eine Sicherungseinrichtung zum Festlegen der Position der Hülse auf der Achse vorgesehen ist.

Hierdurch wird die jeweilige Hülse an einer definierten Position auf der Achse gehalten.

Dabei hat es sich erfindungsgemäß als sehr vorteilhaft erwiesen, wenn die Sicherungseinrichtung lösbar vorgesehen ist.

Dadurch kann die Hülse beispielsweise zum Reinigen sehr leicht verschoben werden. Hierzu wird die Sicherungseinrichtung gelöst.

Gemäß einer weiteren Ausgestaltung der Erfindung ist es auch sehr vorteilhaft, wenn die Achse statisch und/oder dynamisch gewuchtet ist.

Damit werden Unwuchten gerade bei höheren Achsdrehzahlen vermieden. Die Wuchtung kann beispielsweise durch Anbringen von Wuchtgewichten an den Teilachsen und/oder an den Enden der Achse erfolgen. Genauso sind definierte Borhungen zur lokalen Reduzierung der Masse denkbar.

Eine erfindungsgemäß sehr vorteilhafte Verwendung einer erfindungsgemäßen Achse liegt vor, wenn die Achse bzw. Welle in einem Transportband als Antriebs- und/oder Führungsachse bzw. Antriebswelle vorgesehen ist.

Hierdurch wird größtmögliche Flexibilität in dieser Anwendung erreicht.

Dabei hat es sich als sehr vorteilhaft erwiesen, wenn die Achse bzw. Welle in einer Lebensmittel verarbeitenden Anlage vorgesehen ist.

Gerade bei derartigen Anlagen ist eine sehr gute Reinigbarkeit wichtig. Diese ist durch die erfindungsgemäße Welle bzw. Achse gewährleistet.

Weiterhin hat es sich als sehr vorteilhaft erwiesen, wenn die Hülse, die Achse bzw. Welle vor allem in einem Zwischenraum zwischen diesen reinigbar ausgebildet ist.

Durch diese Reinigbarkeit ist gewährleistet, daß die Hygienevorschriften für Lebensmittelmaschinen sichergestellt werden können.

Im folgenden wird die Erfindung anhand mehrere Ausführungsbeispiele veranschaulicht.

Dabei zeigen:
- Fig. 1: eine erfindungsgemäße Achse mit drei Teilachsen und einer darauf gelagerten Hülse,
- Fig. 2: eine weitere erfindungsgemäße Achse mit einer halbkreisförmigen und einer stabförmigen Teilachse,
- Fig. 3: eine dritte Variante einer erfindungsgemäßen Achse mit drei stabförmigen Teilachsen, deren Außenkontur an die kreisförmige Kontur der Gesamtachse angepasst ist,
- Fig. 4: eine vierte Variante einer erfindungsgemäßen Achse mit drei rechteckigen Teilachsen, deren Außenkontur an die kreisförmige Kontur der Gesamtachse angepasst ist,
- Fig. 5: eine weitere Darstellung der zweiten Variante mit zusätzlicher Verstärkung und einer aufgeschobenen Hülse,
- Fig. 6: eine Detaildarstellung der zweiten Variante gemäß Fig. 5,
- Fig. 7: eine Darstellung einer Variante mit verdrehten Teilachsen,
- Fig. 8: eine Darstellung einer Variante, bei der die Teilachsen mit den Lagerstücken verschraubt sind,
- Fig. 9: eine Darstellung einer Hülse mit an die jeweilige Welle angepasster Innenkontur,
- Fig. 10: eine Darstellung einer Welle mit an die Wellenkontur angepasster Hülse,
- Fig. 11: zwei Wellen eines Transportbandes mit unterschiedlichen Hülsen, und
- Fig. 12: eine Detaildarstellung einer Welle mit unterschiedlichen Hülsen.

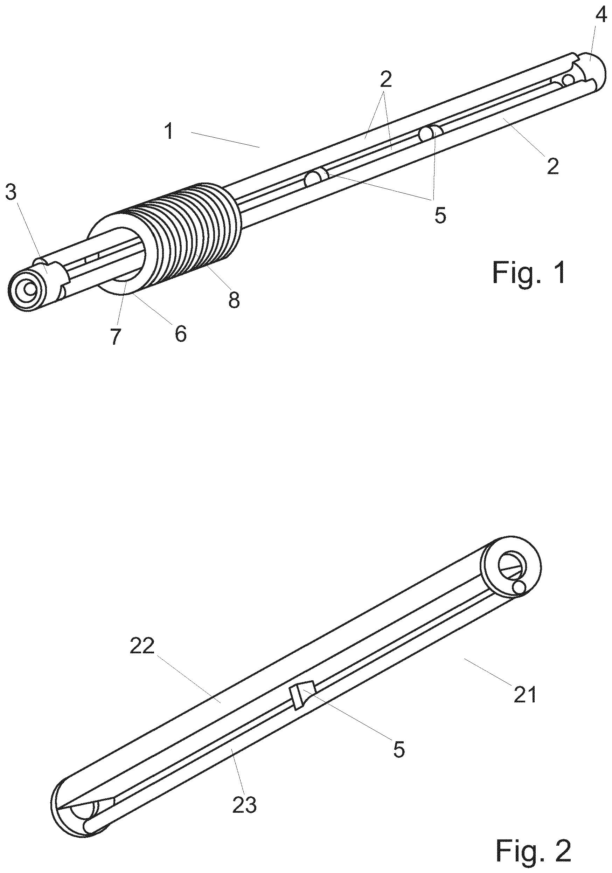

Mit 1 ist in Fig. 1 eine Achse bezeichnet, die aus drei stabförmigen Teilachsen 2 aufgebaut ist, die parallel zueinander angeordnet sind und jeweils einen kreisförmigen Querschnitt aufweisen. Diese Teilachsen 2 sind an ihren Enden jeweils mit einem Lagerzapfen 3 bzw. 4 verbunden, mit deren Hilfe die Achse 1 in einer Maschinenanordnung drehbar oder starr gelagert werden kann.

Die drei Teilachsen 2 sind dabei so zueinander angeordnet, daß diese einen einhüllenden, kreisförmigen Querschnitt der Gesamtachsen 1 definieren.

Die Teilachsen 2 sind auf ihrer Längserstreckung in diesem Ausführungsbeispiel mit zwei Verbindern 5 untereinander verbunden. Durch diese zusätzliche Verbindung wird die Gesamtachse deutlich biegesteifer und kann größere Kräfte aufnehmen.

Die Teilachsen 2 sind in Bezug auf die Gesamtachse 1 jeweils in einem Winkel von 120° auf der einhüllenden Außenkontur der Gesamtachse 1 angeordnet und somit gleichmäßig verteilt. Andere Anordnungen und andere Anzahlen an Teilachsen sind denkbar.

Auf der Achse 1 ist eine Hülse 6 angeordnet, deren Innenkontur 7 kreisförmig ausgebildet ist. Die Innenkontur 7 entspricht der Außenkontur der Achse 1, so daß die Hülse in radialer Richtung spielfrei auf der Achse gelagert ist.

Dennoch ist die Hülse 6 auf der Achse 1 verschiebbar.

Die Außenkontur der Hülse 6 weist in diesem Ausführungsbeispiel über den Umfang verlaufende Rillen 8 zur Aufnahme von Transportbänder auf.

Insgesamt kann sich somit sowohl die Achse 1 in ihrer Lagerung als auch die Hülse 6 auf der Achse 1 drehen.

Soll eine mit einer solchen Achse ausgerüstete Maschine nun gereinigt werden, ist es einerseits ein Leichtes, zwischen den Teilwellen 2 Reinigungsmittel auch auf die Innenseite der Innenkontur 7 der Hülse 6 einzubringen. Dies erfolgt in Der Regel durch sprühen.

Zudem kann die Hülse 6 auf der Achse 1 in axialer Richtung verschoben werden, so daß jeder Bereich der Achse 1 zugänglich und reinigbar ist.

Um ein unerwünschtes Verschieben der Hülse 6 auf der Achse 1 zu verhindern ist es denkbar, daß eine entsprechende Sicherung vorgesehen ist. Dies kann beispielsweise ein Klemmring auf der Achse sein. Auch eine maschinenseitige Vorrichtung ist hier denkbar. So kann maschinenseitig beispielsweise eine Art Kamm vorgesehen sein, der an den axialen Enden der Hülse oder auch in die Rillen eingreift und so ein verschieben verhindert. Ein solcher Kamm kann beispielsweise wegklappbar oder wegnehmbar sein.

Anstatt der drei stabförmigen Teilachsen 2 der ersten Variante ist es auch denkbar, daß wie in Fig. 2 dargestellt, eine Halbachse 22 mit einem halbkreisförmigen Querschnitt und eine dieser entsprechend gegenüber angeordneten stabförmigen Teilachse 23 vorgesehen sein. Die Halbachse 22 und die Teilachse 23 bilden zusammen wiederum eine kreisförmige Einhüllende und damit die Gesamtachse 21.

Eine solche Ausgestaltung bietet im Vergleich zum ersten Ausführungsbeispiel eine vergrößerte Anlagefläche für die Hülse 6. Daher können größere Zugkräfte aufgenommen werden. Hierzu kann es jedoch zweckdienlich sein, die Achse 21 drehfest in der Maschine zu lagern, so daß die Zugbelastung auf den halbkreisförmigen Abschnitt der Halbachse 22 trifft.

Auch hier können Verstärkungen 5 vorgesehen sein, die die Teilachse 23 stabilisieren und vor allem auch Schwingungen verhindern.

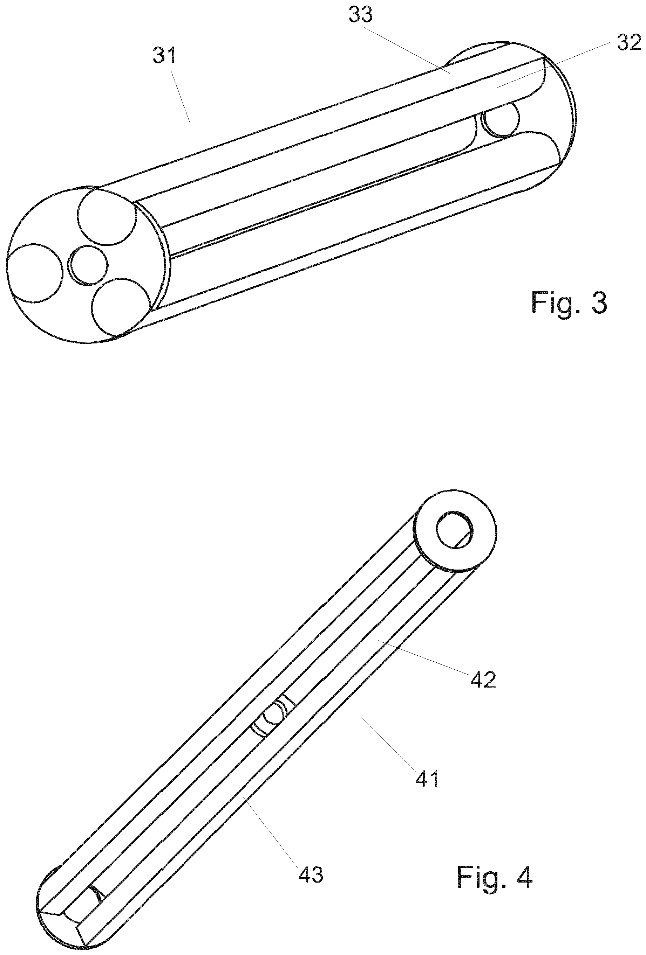

Wie in Fig. 3 dargestellt können auch stabförmige Teilachsen 32 vorgesehen sein, deren Kontur an die kreisförmige Einhüllende der Gesamtachse 31 angepasst ist. Durch diese Anpassung wird die Anlagefläche 33 der Teilachsen 32 an der Innenkontur 7 der Hülse vergrößert. Diese ist dann nicht mehr linienförmig, sondern flächig, wodurch größere Zug- und Druckkräfte auf die Achse übertragen werden können. Aufgrund geringerer Flächenpressung ist auch ein geringerer Verschleiß zu erwarten.

Die Reinigbarkeit wird dadurch nicht negativ beeinflusst.

Dabei können die stabförmigen Teilachsen 42 auch einen rechteckigen Querschnitt aufweisen, wobei die eine Seitenfläche an die kreisförmige Einhüllende der Achse 41 angepasst ist und eine Anlagefläche 43 für die Hülse 6 bildet.

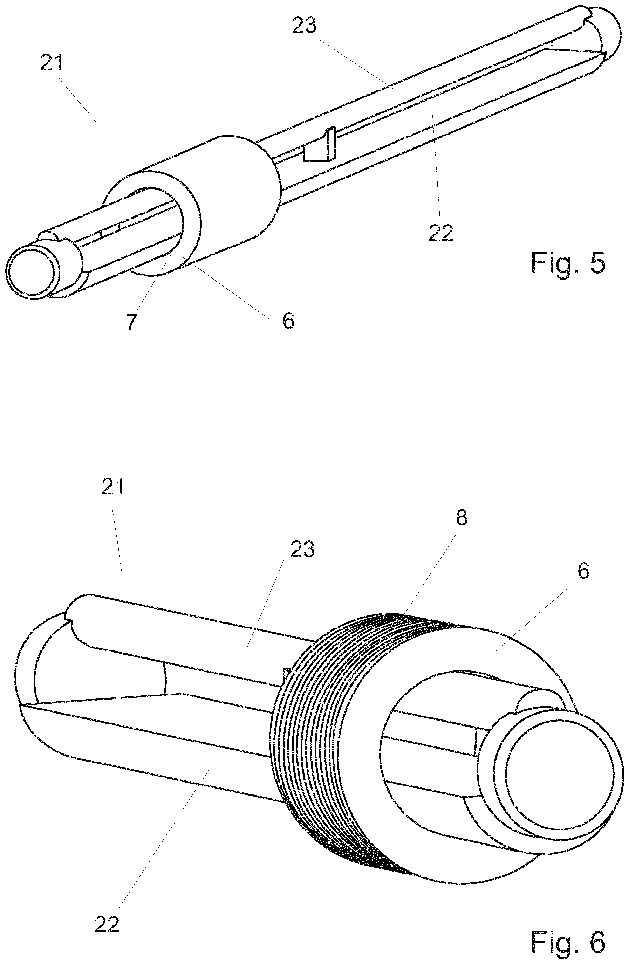

Fig. 5 zeigt eine Achse 21 gemäß zweitem Ausführungsbeispiel mit aufgeschobener Hülse 6. Die Außenseite der Hülse 6 ist in diesem Fall glatt ausgestaltet und kann als Umlenkung oder Stütze für Transportbänder dienen.

Zwischen der Halbachse 22 und der Teilachse 23 kann sehr gut Reinigungsmittel oder dergleichen auch im Bereich der Hülse 6 eingebracht werden, so daß auch ohne Verschieben der Hülse 6 bereits eine Reinigung der Außenseite der Achse 21 und der Innenseite 7 der Hülse 6 gewährleistet werden kann.

Dies ist nochmals in Fig. 6 im Detail dargestellt, wobei hier eine Hülse 6 mit Nuten 8 auf der Außenseite gezeigt ist.

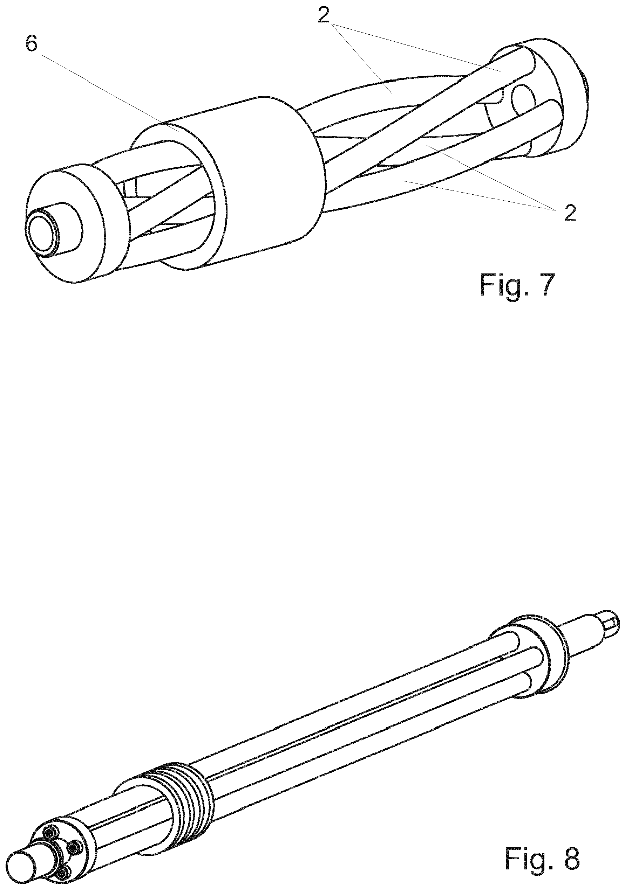

Es ist, wie in Fig. 7 dargestellt, denkbar, daß die Teilachsen, hier als Beispiel die vier stabförmigen Teilachsen 2, in sich verdrillt ausgeführt sind, und so einen schraubenförmigen Verlauf einnehmen. Die Stabilität der Gesamtachse 1 wird dadurch nochmals signifikant erhöht. Zudem kann eine nochmals verbesserte Anlage der Hülsen 6 gewährleistet werden. Eine gleichlaufende Verdrillung, wie in diesem Beispiel gezeigt, ist denkbar.

Die Achsen sind dabei mittels verschiedenster Herstellungsverfahren hergestellt. Es bieten sich alle zweckdienlichen Fügeverfahren, beispielsweise Schweißen, Löten, Laserschweissen, Kleben, Schrauben oder dergleichen an. Hierdurch können einerseits die Teilachsen mit den Lagerstücken als auch die Verstärkungen mit den Teilachsen verbunden werden.

Ein Beispiel für eine Schraubverbindung ist in Fig. 8 dargestellt.

Sollen die erfindungsgemäßen Achsen und Wellen in Hochgeschwindigkeitsanwendungen eingesetzt werden so kann es zweckdienlich sein, die Wellen statisch und/oder dynamisch zu wuchten. Dies kann beispielsweise durch Anbringen von Wichtgewichten an den Teilachsen und/oder an den Lagerstücken erfolgen. Wuchtbohrungen zum lokalen Reduzieren des Gewichtes sind ebenfalls denkbar.

Die erfindungsgemäße Ausgestaltung der Achsen ermöglicht aber auch eine wahlweise Verwendung als Wellen, die Drehmoment auf Transportbänder übertragen können.

Hierzu sind Hülsen 76 vorgesehen, deren Innenkontur 77 an die Kontur der jeweiligen Welle angepasst ist. Im vorliegenden Ausführungsbeispiel ist eine Anpassung an eine Welle 1 mit drei stabförmigen Teilwellen 2 gezeigt.

Die Anpassung an die Kontur der jeweiligen Welle beinhaltet, daß die Innenkontur 77 der Hülse 76 zwischen die Teilwellen 2 eingreift. Hierzu sind Vertiefungen 78 in der Innenkontur 77 der Hülse 76 vorgesehen, welche den jeweiligen Teilwellen entsprechen. Insgesamt ist die Einhüllende der Innenkontur 77 jedoch kleiner wie die Einhüllende der Außenkontur der jeweiligen Welle.

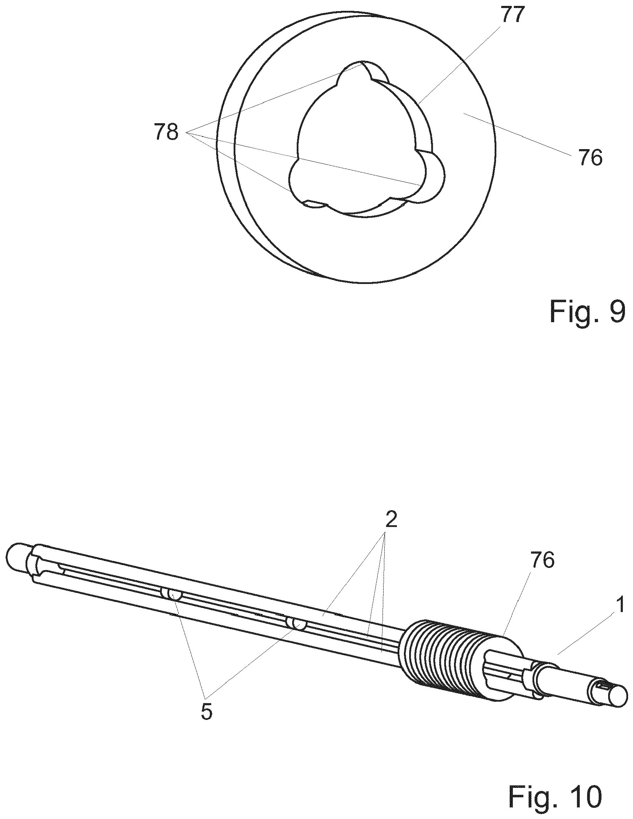

Diese Hülsen 76 sind auf die Welle 1, wie in Fig. 10 dargestellt aufgeschoben. Durch den Eingriff der Innenkontur 77 in die Welle 1, also zwischen die Teilwellen 2, wird Drehmoment zwischen der Welle 1 und der Hülse 76 übertragen.

Auch hier lässt sich auch auf der Innenseite der Hülse 76 Reinigungsmittel aufbringen. Durch Verschieben der Hülse 76 ist die Welle 1 als auch die Innenseite 77 der Hülse 76 sehr gut reinigbar.

Durch entsprechende Kombination von Hülsen 6 und Hülsen 76 kann eine Achswelle geschaffen werden, die sowohl als Umlenkung und gleichzeitig auch als Antrieb dienen kann.

Selbst unterschiedliche Geschwindigkeiten der Umlenkung und des Antriebes sind denkbar.

Die Konfiguration einer solchen Achswelle muss auch nicht vorher festgelegt werden. Ausschließlich durch die entsprechende Kombination von Hülsen 6 und 76 wird die Konfiguration festgelegt. Hierzu werden die Achswellen, aber auch die Hülsen 6 und 76 als Standardteile bereitgestellt und dann je nach Einsatzzweck entsprechend konfiguriert.

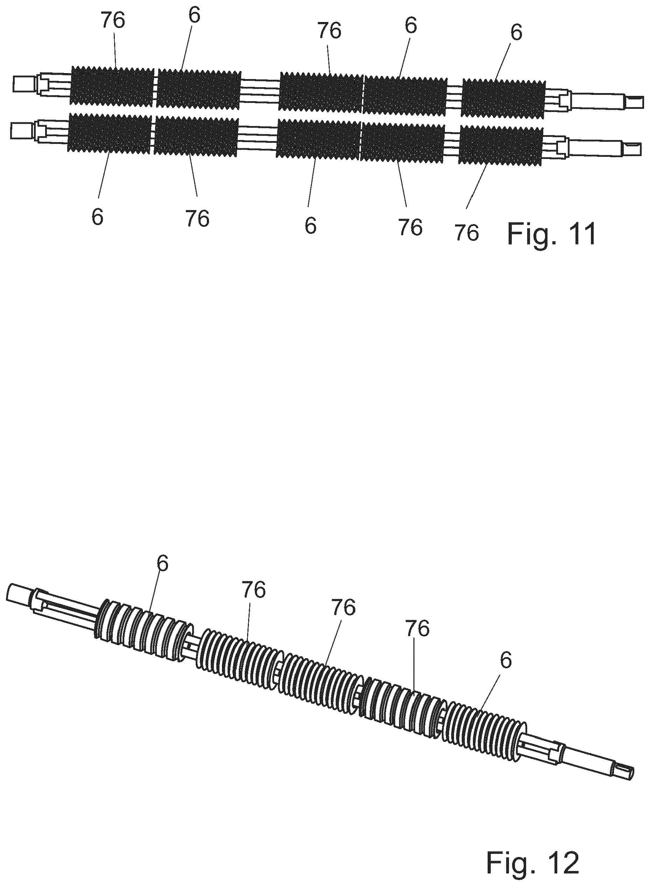

Eine beispielhafte Konfiguration ist in Fig. 11 und 12 gezeigt.

Hier ist ein Achswellenpaar dargestellt, welches sowohl Antriebswelle als auch Umlenkachse ist.

Unterschiedliche Ausführungen der einzelnen Hülsen 6 und 76 beispielsweise hinsichtlich ihrer äußeren Oberfläche, der vorgesehenen Nuten 8 oder dergleichen sind denkbar.

Insgesamt wird ein sehr gut reinigbares und sehr flexibel einsetzbares System geschaffen, welches gerade in Lebensmittelmaschinen die entsprechenden Hygieneanforderungen sicherstellen kann.

## Patentansprüche

1. Achse (1) bzw. Welle, **dadurch gekennzeichnet, daß** die Achse (1) mehrteilig ausgebildet ist.

2. Achse nach Anspruch 1, **dadurch gekennzeichnet, daß** mehrere Teilwellen (2, 22, 23, 32, 42) nebeneinander angeordnet sind.

3. Achse nach Anspruch 1 oder 2, **dadurch gekennzeichnet, daß** die Teilwellen (2, 22, 23, 32, 42) stabförmig, teilkreisförmig, segmentförmig, drei- oder mehreckig ausgebildet sind.

4. Achse nach Anspruch 1, 2 oder 3, **dadurch gekennzeichnet, daß** die Teilwellen (2, 22, 23, 32, 42) zusammen die Achse (1, 21, 31) bzw. Welle bilden.

5. Achse nach einem der vorangehenden Ansprüche, **dadurch gekennzeichnet, daß** die Teilwellen (2, 22, 23, 32, 42) voneinander beabstandet angeordnet sind.

6. Achse nach einem der vorangehenden Ansprüche, **dadurch gekennzeichnet, daß** die Teilachsen (2, 22, 23, 32, 42) bzw. Teilwellen in sich gedreht bzw. gedrillt, insbesondere schraubenförmig ausgebildet sind.

7. Achse nach einem der vorangehenden Ansprüche, **dadurch gekennzeichnet, daß** die Teilwellen (2, 22, 23, 32, 42) zumindest punktuell miteinander verbunden sind.

8. Achse nach einem der vorangehenden Ansprüche, **dadurch gekennzeichnet, daß** mindestens eine Hülse (6, 76) vorgesehen ist, die auf die Achse (1, 21, 31, 41) aufgeschoben ist.

9. Achse nach einem der vorangehenden Ansprüche, **dadurch gekennzeichnet, daß** die Hülse (6) innen einen kreisförmigen Querschnitt aufweist.

10. Achse nach einem der vorangehenden Ansprüche, **dadurch gekennzeichnet, daß** die Hülse (76) innen einen an die Achse angepassten Querschnitt aufweist.

11. Achse nach einem der vorangehenden Ansprüche, **dadurch gekennzeichnet, daß** die Hülse (76) innen einen in die Achse eingreifenden Querschnitt aufweist.

12. Achse nach einem der vorangehenden Ansprüche, **dadurch gekennzeichnet, daß** die Hülse (6) auf der Achse (1, 21, 31, 41) drehbar gelagert ist.

13. Achse nach einem der vorangehenden Ansprüche, **dadurch gekennzeichnet, daß** die Hülse (6) auf der Achse (1, 21, 31, 41) hinsichtlich ihrer Drehbarkeit kraftschlüssig gelagert ist.

14. Achse nach einem der vorangehenden Ansprüche, **dadurch gekennzeichnet, daß** die Hülse (6) auf der Achse (1, 21, 31, 41) verschiebbar gelagert ist.

15. Achse nach einem der vorangehenden Ansprüche, **dadurch gekennzeichnet, daß** eine Sicherungseinrichtung zum Festlegen der Position der Hülse (6, 76) auf der Achse (1, 21, 31, 41) vorgesehen ist.

16. Achse nach Anspruch 15, **dadurch gekennzeichnet, daß** die Sicherungseinrichtung lösbar vorgesehen ist.

17. Achse nach einem der vorangehenden Ansprüche, **dadurch gekennzeichnet, daß** die Achse (1, 21, 31, 41) statisch und/oder dynamisch gewuchtet ist.

18. Verwendung einer Achse nach einem der vorangehenden Ansprüche, **dadurch gekennzeichnet, daß** die Achse (1, 21, 31, 41) bzw. Welle in einem Transportband als Antriebs- und/oder Führungsachse bzw. Antriebswelle vorgesehen ist.

19. Verwendung nach Anspruch 18, **dadurch gekennzeichnet, daß** die Achse (1, 21, 31, 41) bzw. Welle in einer Lebensmittel verarbeitenden Anlage vorgesehen ist.

20. Verwendung nach Anspruch 18 oder 19, **dadurch gekennzeichnet, daß** die Hülse (6, 76), die Achse (1, 21, 31, 41) bzw. Welle vor allem in einem Zwischenraum zwischen diesen reinigbar ausgebildet ist.
